# EUROPEAN PATENT SPECIFICATION

(11) **EP 1 971 656 B1**
(45) Date of publication and mention of the grant of the patent: **24.07.2013**
(21) Application number: 06838994.9
(22) Date of filing: 05.12.2006
(51) Int. Cl.: C09D 175/06, C09J 175/06, C08G 18/28, C08G 18/12, C08G 18/32, C08G 18/42, C08G 18/75

(54) **SILYLATED POLYURENTHANE-POLYUREA PROTECTIVE COATING COMPOSITIONS**
SCHUTZLACKE AUF BASIS VON SILYLIERTEM POLYURETHAN-POLYHARNSTOFF
COMPOSITIONS DE REVETEMENT PROTECTEUR A BASE DE POLYUREE-POLYURETHANE SILYLE

(30) Priority: 06.12.2005 US 295084
(43) Date of publication of application: 24.09.2008
(73) Proprietor: Momentive Performance Materials Inc., Waterford, New York 12188 (US)
(72) Inventor: GRISWOLD, Roy, M., Ballston Spa, NY 12144 (US)
(74) Representative: Zinnecker, Armin
(86) International application number: PCT/US2006/046380
(87) International publication number: WO 2007/067531

(56) References cited:
- WO-A1-00/39179
- US-A1- 3 895 043
- US-A1- 3 903 052
- US-A1- 4 628 076
- US-B1- 6 762 241

## Description

### BACKGROUND OF THE ART

The present invention relates to coatings applied to a substrate for protection against corrosion, erosion, and other harmful environmental conditions.

Protective coatings are of two types. Protective coatings consist of either conversion coatings or barrier type coatings. Conversion coatings involve a chemical reaction that modifies a substrate surface. Typical conversion coatings utilize chromate treatments on metals or alloys such as aluminum, steel, and galvanized steel. Metal surfaces are normally coated from an aqueous solution that contains hexavalent or trivalent chromium ions, phosphate ions and/or fluoride ions. There is an increased environmental concern over the use of chromate (chromium) anti-corrosion treatments because of the leaching of toxic chromium salts into the environment.

A conversion coating typically modifies the composition or microstructure of the surface of the substrate by means of a chemical reaction or treatment. Such treatments usually result in producing a modification to the surface morphology. Examples include pack cementation and slurry cementation, specifically chromating and aluminizing. These techniques utilize diffusion to produce a surface coating that diffuses into the substrate. Thus a composition gradient exists between the surface of the treated substrate and the interior.

Other techniques involve the use of protective ceramic coatings or coatings of organic resins. Coatings comprised of organic resins typically function as barrier coatings. Barrier type coatings overlay a substrate and protect it from erosion; corrosion and in some cases strengthen a substrate. Despite considerable efforts these have not provided the equivalent corrosion resistance that chromate or aluminized based coatings provide.

US 3,895,043 and 4,143,060 Wagner, K. et al., discloses a process for making silyl substituted urea derivatives by reaction of an diamino-terminated polyurea or polyurethane comprising ester, ether and or carbonate groups with isocyanate-silaimidazolidone derivatives. The separate preparation of the isocyanate-silaimidazolidone contributes to additional manufacturing complexity and cost. Additionally these compositions would not have barrier coating chemical resistance to for example hydric or polyhydric solvents such as alcohols, glycols, etc.

US 3,676,478 Golitz, H.D., et al., discloses sily-substituted urea derivatives the reaction product of aminosilane with isocyanate-terminated polyether prepolymer. Compositions disclosed are polyether polyurethane prepolymers terminated with an aminosilane. No mention of chain extension by diamine compositions is made. Additionally these compositions would not have barrier coating chemical resistance to for example hydric or polyhydric solvents such as alcohols, glycols, etc.

US 5,744,528 Callinan, A., et al. discloses moisture curable polymers containing urethane and/or urea linkages terminated with silane groups. Disclosed compositions have a viscosity limitation of equal to or below 500 Pa-s and have high silane content which has been found to not be effective for barrier coatings with chemical resistance and add significantly to cost.

US 3,941,733 and 3,983,291 Chang, J.H-S, discloses aqueous dispersions of silyl-poly(urethane-urea) containing solubilizing groups such as carboxyl groups which render such compositions not suitable for barrier coatings with chemical resistance as for example to hydric or polyhydric solvents as previously mentioned above.

US 2002/0146382 A1 Mallo, R.A., et al., discloses cosmetic compositions based on aqueous silylated polyurethane-ureas containing hydrophilic component which would result in not being barrier coatings having chemical resistance especially to hydric or polyhydric solvents.

US 5,919,860 Roesler, R.R., et. al., discloses aqueous silylated polyurethane-urea dispersions comprised of 1 to 6 wt% silane (as Si Mw 28) the reaction product of a secondary aminosilane with an isocyanate terminated polyurethane-urea prepolymer having anionic and hydrophilic components. These compositions would not be barrier coatings with chemical resistance to hydric and polyhydric solvents.

### SUMMARY OF THE INVENTION

The present invention relates to a method for making a moisture-curable silane-teminated polymer comprising:
a) reacting a polyol, polyisocyanate, and polyamine together to provide an isocyanate-terminated polyurethane-polyurea prepolymer with at least two urethane linkages and at least two urea linkages in the prepolymer chain of the polymer;
b) capping at least a portion of the prepolymer polymer provided in step (a) with a silane possessing at least one alkoxy group to provide the moisture-curable silane-terminated polymer,
   wherein the polyamine is a secondary diamine.
The present invention furthermore relates to a moisture-curable composition made by the process of the present invention comprising a silane-terminated polymer containing at least two urethane linkages and at least two urea linkages in the polymer chain and possessing a number average molecular weight of from 15000-50000.
The present invention further relates to a method for treating the surface of a substrate comprising:
a) applying the moisture-curable composition as mentioned above and
b) curing that composition.

A moisture-curable composition is provided herein, which comprises a silane-terminated polymer containing at least two urethane linkages and at least two urea linkages in the polymer chain and possessing a number average molecular weight of from about 15,000 to about 50,000.

The moisture-curable composition is advantageously useful for protective coatings and includes a silane-terminated polyurethane-polyurea polymer made by reacting a polyol, polyisocyanate, and polyamine together in such a manner as to provide an isocyanate-terminated polyurethane-polyurea polymer with repeating urethane and urea linkages in the molecular chain of the polymer, and capping at least a portion of the isocyanate-terminated polymer with a silane having at least one alkoxy group to provide the moisture-curable silane-terminated polymer.

The moisture-curable silane-terminated polymer of the invention provides a barrier coating for various substrates having excellent adhesion, hardness and chemical resistance comparable with chromate coatings.

### DETAILED DESCRIPTION OF THE INVENTION

The present disclosure involves barrier coatings to protect a substrate from chemical agents to prevent corrosion of the substrate onto which the coating has been applied. Application of the coating to the substrate produces a laminate comprising the substrate and the coating wherein the laminate is more resistant to corrosion by various chemical agents than the uncoated and therefore untreated substrate.

As used herein, the term "polyisocyanate" means an organic compound having two or more isocyanate groups and "polyol" means a compound having two or more hydroxy groups thereon.

Unless otherwise indicated herein, "alkyl" may be linear, branched or cyclic; "aryl" includes alkaryl groups such as tolyl, and aralkyl groups such as benzyl; and "alkylene" may be linear, branched or cyclic and includes alkylene groups having pendent or internal aryl groups such as 1,4-diethylenephenylene.

In one embodiment, the invention comprises a silylated polyurethane-polyurea polymer which can be used in compositions to provide effective protection coating material sealants and adhesives for substrates such as metal ceramic, wood, masonry.

The moisture-curable silylated polyurethane-polyurea polymer of the invention contains both urethane linkages (-C-O-C(O)-NH-C-) and urea linkages (-C-NH-C(O)-NH-C-) in the backbone of the polymer chain. Moreover, the silylated polyurethane-polyurea of the invention is a thermoplastic.

In one embodiment of the invention, a polymer polyol is reacted with a polyisocyanate to provide an isocyanate-terminated polyurethane, which is reacted with a diamine to provide an isocyanate-terminated polyurethane-polyurea. The latter is then reacted with a silylating agent to provide the silylated polyurethane-polyurea. The silylated polymers of the invention generally have a number average molecular weight (Mn) of from 15,000 to 50,000, more narrowly from 20,000 to 40,000. Moreover, the silylated polymers of the invention contain no more than 5% by weight silicon based upon total solids content. In another embodiment the silylated polymer of the invention contains no more than about 2% by weight of silicon based upon total solids content. In yet another embodiment the silylated polymer of the invention contains no more than 1% by weight of silicon based upon total solids content.

The silylated polymers of the present invention may be prepared with polycarbonate polyols, polyester polyols, polyetherester polyols, polyesterether polyols, polyolefin polyols, polycaprolactone and polyacrylate polyols, or hydroxyl-terminated hydrocarbon polymers, e.g. those obtained from butadiene, or other polyol compounds. Other polyols contemplated herein include polyols like polyhydroxy polycarbonates, polyhydroxy polyacetals, polyhydroxy polyacrylates, polyhydroxy polyester amides and polyhydroxy polythioethers, polyolefin polyols and low molecular polyol like glycol, triethylene glycol, propylene glycol, butanediol, hexylene glycol, trimethylol propane, 1,2,6-hexanetriol, 1,2,4-butanetriol, trimethylol ethane, pentaerythritol, mannitol, sorbitol, sucrose or/and alkylol amines such as diethanolamine, triethanolamine.

Suitable polyols include polyoxyalkylene (especially polyoxypropylene, and polyoxybutylene) diols, polyoxyalkylene triols, polytetramethylene glycols, polyacetals, polyhydroxy polyacrylates, polyhydroxy polyesters, polyhydroxy polyamides, polyhydroxy polyester amides and polyhydroxy polythioethers, polycaprolactone diols and triols. Other polyol compounds, including tetraols, hexaols, alkoxylated bisphenols or polyphenols, and various sugars and derivatives thereof may also be used, including pentaerythritol, sorbitol, mannitol.

In one embodiment of the present invention, the polyols used in the production of isocyanate-terminated polyurethane prepolymers are polyester polyols with equivalent weights between 500 and 25,000. Mixtures of polyols of various structures, molecular weights and/or functionalities may also be used.

The above-mentioned hydroxyfunctional polyols are converted into isocyanate-terminated polyurethane prepolymers in known manner by reaction with isocyanates. In one embodiment of the present invention, isocyanate terminated polyurethane prepolymers are prepared by reacting an excess of polyisocyanate with a polyol or a combination of polyols usually in the presence of a catalyst. The ratio of isocyanate groups to hydroxyl groups (NCO:OH) ranges from between 1.05:1 to 5:1.0 and all ranges therebetween.

Suitable polyisocyanates include any from which polyurethane polymers can be prepared by the customary sequence of reaction with polyol to form a prepolymer. Useful diisocyanates include, for example, 2,4-toluene diisocyanate, 2,6-toluene diisocyanate, 4,4' diphenyl-methanediisocyanate, isophorone diisocyanate, dicyclohexylmethane-4,4'-diisocyanate, various liquid diphenylmethane-diisocyanates containing a mixture of 2,4- and 4,4' isomers, and mixtures thereof. In one embodiment of the present invention, the isocyanate functional monomer employed is a mixture of 2,4- and 4,4' diphenylmethane diisocyanates (MDI) which is available from Bayer under the trade name Desmodur® M-0129.

A catalyst may be used in the preparation of the above-mentioned polyurethane prepolymers. Suitable catalysts are dialkyltin dicarboxylates, such as dibutyltin dilaurate and dibutyltin acetate, tertiary amines, the stannous salts of carboxylic acids, such as stannous octoate and stannous acetate. In one embodiment of the present invention, dibutyltin dilaurate catalyst is used in the production polyurethane prepolymer. Other catalysts include zirconium complex (KAT XC6212, K-KAT XC-A209 available from King Industries, Inc., aluminum chelate (K-KAT 5218, K-KAT 4205 available from King Industries, Inc., titanic chelate (TYZER® types available from DuPont company, and KR types available from Kenrich Petrochemical, Inc., and other organic metal, such as Zn, Co, Ni, and Fe and the like. Additionally, amine catalysts such as 4,4'-(oxydi-2,1-ethanediyl)bismorpholine, N-methylmorpholine, bis(2-dimethylaminoethyl)ether, triethylenediamine, benzyldimethylamine, N,N'-dimethylpiperazine available from Huntsman LLC, Salt Lake City, Utah.

In a second step of this embodiment, the isocyanate terminated polyurethane prepolymer produced in the first step is reacted with a polyamine to provide chain extension via urea linkages within the polymer chain. In one embodiment the polyamine is a diamine. Optionally, the diamine is a secondary amine. In an embodiment the amines have the formula:

R¹HN-R-NHR²

Wherein R, R¹ and R² are independently selected from any alkyl aryl or alkylene group having from 2 to 20 carbon atoms. Suitable diamines for use in the invention include N,N'-diethyl-1,3-propane diamine, N,N'-dimethyl-1,3-propane diamine, 1,2-diaminoethane, 1,4-diaminobutane, N,N'-dimethylethylene diamine, N,N'-diethylethylene diamine, hexamethylene diamine, 4,4'-methylenebis(2-methylcyclohexylamine), 5-amino-1,3,3-trimethylcyclohexanemethylamine, N-isopropyl(5-amino)-1,3,3-trimethylcyclohexariemethyl-N'-isopropylamine. An excess of the stoichiometric amount of isocyanate-terminated prepolymer is reacted to provide an isocyanate-terminated polyurethane-polyurea. Generally, the molar ratio of isocyanate groups to amine groups ranges from between 1.01:1 to 2.6:1.0, and all ranges there between.

In a third step of this embodiment, the isocyanate-terminated polyurethane-polyurea is terminated with a silylating agent. The silylating agent is preferably a silane containing at least one, preferably at least two, and more preferably, at least three, alkoxy groups and at least one group reactive with the isocyanate terminated polyurethane-polyurea. Non-limiting examples of alkoxy groups include methoxy, ethoxy, propoxy, and butoxy. Optionally, the endcapping silylating agent and chain extending diamine can be pre-mixed, with the iscocyanate-terminated polyurethane being mixed with the combined chain extender/endcapping agent in a solution. Suitable silanes that may be used to prepare silane-terminated polyurethanes include, but are not limited to, N-methyl-3-amino-2- methylpropyltri-methoxysilane, N-ethyl-3-amino-2-methylpropyltrimethoxysilane, N- ethyl-3-amino-2-methylpropyldiethoxymethylsilane, N-ethyl-3-amino-2- methylpropyltriethoxysilane, N-ethyl-3-amino-2-methylpropylmethyldimethoxysilane, N-butyl-3-amino -2-methyl-propyltrimethoxysilane, 3-(N-methyl-2-amino-1-methyl-1- ethoxy)-propyltrimethoxysilane, N-ethyl-4-amino-3,3-dimethylbutyldimethoxymethylsilane, N-ethyl-4-amino-3,3- dimethylbutyltrimethoxysilane, bis-(3-trimethoxysilyl-2-methylpropyl)amine and N-(3'-trimethoxysilylpropyl)-3-amino-2-methylpropyltrimethoxysilane.

Moreover, any hydrogen active organofunctional silane that includes at least one functional group (e.g., hydrogen) that is reactive with an isocyanate group of the polyurethane-polyurea prepolymer, and at least one silyl group can be used. Examples of useful silyl groups include alkoxysilyls, aryloxysilyls, alkyloxyiminosilyls, oxime silyls, and amino silyls. In one embodiment of the present invention, the hydrogen active organofunctional silanes include, e.g., aminosilanes (e.g., secondary amino-alkoxysilanes and mercapto-alkoxysilanes. Examples of suitable aminosilanes include phenyl amino propyl trimethoxy silane, methyl amino propyl trimethoxy silane, n-butyl amino propyl trimethoxy silane, t-butyl amino propyl trimethoxy silane, cyclohexyl amino propyl trimethoxy silane, dibutyl maleate amino propyl trimethoxy silane, dibutyl maleate substituted 4-amino 3,3-dimethyl butyl trimethoxy silane, amino propyl triethoxy silane and mixtures thereof. Specific examples of which include N-methyl-3-amino-2-methylpropyltrimethoxysilane, N-ethyl-3-amino-2-methylpropyltrimethoxysilane, N-ethyl-3-amino-2-methylpropyldiethoxysilane, N-ethyl-3-amino-2-methylpropyltri-ethoxysilane, N-ethyl-3-amino-2-methylpropylmethyldimethoxysilane, N-butyl-3-amino-2-methylpropyltrimethoxysilane, 3-(N-methyl-3-amino-1-methyl-1-ethoxy)propyltrimethoxysilane, N-ethyl-4-amino-3,3-dimethylbutyidimethoxymethylsilane, N-ethyl-4-amino-3,3-dimethylbutyltrimethoxysilane, bis-(3-trimethoxysilyl-2-methylpropyl)amine, N-(3'-trimethoxysilylpropyl)-3-amino-2-methylpropyltrimethoxysilane, N,N-bis[(3-triethoxysilyl)propyl]amine, N,N-bis[(3-tripropoxy-silyl)propyl]amine; N-(3-trimethoxysilyl)propyl-3-[N-(3-trimetlioxysilyl)-propylamino]propionamide, N-(3-triethoxysilyl)propyl-3-[N-3-triethoxysilyl]-propylamino]propionamide , N-(3-trimethoxysilyl)propyl-3-[N-3-triethoxysilyl]-propylamino]propionamide, 3-trimethoxysilylpropyl 3-[N-(3-trimethoxysilyl)-propylamino]-2-methyl propionate, 3-triethoxysilylpropyl 3-[N-(3-triethoxysilyl)-propylamino]-2-methyl propionate, 3-trimethoxysilylpropyl 3-[N-(3-triethoxysilyl)-propylamino]-2-methyl propionate, gamma-mercaptopropyl-trimethoxysilane and N,N'-bis((3-trimethoxysilyl)propyl)amine.

Useful commercially available aminosilanes include, e.g., aminosilanes available under the Silquest® series of trade designations including, e.g., Silquest® A-1170, Silquest® A-1110, Silquest® Y-9669 and Silquest® A-15 from General Electric Company, under the Dynasylan® series of trade designations including, e.g., Dynasylan® 1189 (N-(n-butyl)aminopropyltrimethoxysilane) and Dynasylan® MTMO (3-mercaptopropyl trimethoxy silane) both of which are available from Degussa Corporation (Naperville, Ill.), and further, under the A-189 trade designation, gamma-mercaptopropyltrimethoxysilane available from General Electric Company (GE).

The reaction of the isocyanate-terminated polyurethane prepolymers with the silane(s) of the present invention is preferably carried out in the presence of catalysts. Suitable catalysts include, but are not limited to tin or titanium compounds, such as dibutyltin dilaurate, dimethylbis[(1-oxoneodecyl)oxy]stannane and mixtures thereof. Optionally, non-silicon containing monoamines, e.g., alkyl amines such as N-ethylbutylamine, dimethylamine, dipropylamine, dibutylamine, N-ethyl-2-methylallylamine, diallylamine can be used in conjunction with the silane as a supplemental capping agent. Use of the non-silicon containing amine can be used to adjust the degree of silylation of the end product. In an embodiment of the invention sufficient non-silicon containing amine is used as a supplemental capping agent so as to provide a final product containing no more than 5% by weight silicon based upon the total solids content.

In another embodiment of the invention a molar excess of the polyisocyanate is first reacted with the polyamine to provide an isocyanate terminated polyurea. A molar excess of the isocyanate terminated polyurea is then reacted with the polyol to provide the isocyanate terminated polyurethane-polyurea prepolymer, which is then silylated with a silylating agent such as mentioned above to provide the moisture curable silylated polyurethane-polyurea product.

In yet another embodiment of the invention, the polyol, polyisocyanate and polyamine can be simultaneously reacted in a single batch process with the proportions of the reactants selected so as to provide the isocyanate terminated polyurethane-polyurea, which is thereafter capped with the silylating agent.

The present invention also relates to the use of the moisture-curable silylated polymer as coating, sealing or adhesive compositions. For practical application, the moisture-curing silylated polymer may contain typical additives, such as pigments, fillers, curing catalysts, dyes, plasticizers, thickeners, coupling agents, extenders and UV stabilizers. Suitable fillers include, but are not limited to, isocyanate-inert inorganic compounds such as, for example, chalk, lime flour, precipitated and/or pyrogenic silica, aluminum silicates, ground minerals and other inorganic fillers familiar to one skilled in the art. In addition, organic fillers, particularly short-staple fibers, may also be used. Fillers that provide the preparations with thixotropic properties, for example swellable polymers, are preferred for certain applications. The typical additives mentioned may be used in the quantities familiar to the expert.

The invention is illustrated by the following non-limiting examples. Comparative examples are presented for comparison purposes only and do not illustrate the invention. All compositions were coated onto substrates as specified in the respective examples. The formulations were flow coated from an ethyl acetate solution containing 30 wt% solids, then air dried for 10 minutes, followed by curing for 10 minutes at 120°C. The coated substrates were tested for hardness against pencils of varying hardness in accordance with ASTM D3363, and cross hatch adhesion in accordance with ASTM D3359 before and after immersion in the specified solvents for 24 hours, and adhesion after a bend of 180° 9.5mm (3/8 inch) radius, and by observation of pinhole defects in the coating.

### Example 1

To a 1-liter reaction vessel equipped with mixing capability, condenser, nitrogen atmosphere and heating was added 30.0 g of hydroxyl terminated polycaprolactone resin (Capa 2077 available from Solvey Caprolactones) possessing a hydroxyl number of 149.7, and 90.5 g ethyl acetate as a solvent. The mixture was reflux dried for two hours then cooled to approximately 75 °C then 0.03 g of a 10 wt% solution of dimethylbis[(1-oxoneodecyl)oxy]stannane catalyst was added followed by drop wise addition of 27.0 g of isophorone diisocyanate with agitation. The temperature was held at 75-78 °C for 12 hours. The wt% NCO was determined per standard methodology to be 4.66 wt%. The heat source was removed and a solution of N,N'-diethyl-1,3-propanediamine in 25.0 g ethyl acetate was added by dropwise addition. At this point a solution of 3.3 g of N-ethyl-amino isobutyl trimethoxysilane (available from GE Advanced Materials under the designation Silquest® A-Link 15), 1.5 g ethylbutylamine and 10.0 g ethyl acetate was added drop wise to the mixture with agitation until the mixture reached room temperature. The reaction product contained 0.7 wt% silicon (Si) based upon total solids content and 68.3 mole % urea. A sample of approximately a 15 g sample of the reaction product was dissolved in 5 g of ethyl acetate, 0.2 g water and 0.02 g of 1 wt% solution of dimethylbis[(1-oxoneodecyl)oxy]stannane. This mixture was flow coated onto cold roll steel panels (Act Laboratories, Inc. APR22178) then immersed in water for 3 days followed by drying 45 minutes at 85 °C. Pencil hardness was 6H and cross-hatch adhesion 5B. Panels were then immersed in 5% NaCl aqueous solution, methanol and toluene for 24 hours then examined. No visible affect observed for the coated panels.

### Example 2

To a 250 ml reaction vessel equipped with mixing capability, condenser, nitrogen atmosphere and heating was added 15.0 g of hydroxyl terminated poly(diethylene glycol glycerine adipate) (available from Inolex Chemical Co. under the designation Lexorez 1842-90) containing a hydroxyl number of 97, 35.0 g of hydroxyl terminated poly(1,4-butanediol neopentyl glycol adipate) (available from Inolex Chemical Co. under the designation Lexorez 1640-150) containing a hydroxyl number of 145, 41.4 g ethyl acetate. The mixture was reflux dried for one hour then cooled to approximately 75 °C at which temperature 0.05 g of a 10wt% solution of dimethylbis[(1-oxoneodecyl)oxy]stannane was added followed by drop wise addition of 39.3 g of isophorone diisocyanate with agitation. The calculated NCO/OH ratio was 3.0. The temperature was held at approximately 75 °C for 3 hours. The wt% NCO was determined per standard methodology to be 7.40 wt%. The heat source was removed and the prepolymer cooled to approximately room temperature. In a separate 500 ml reaction vessel equipped as described above a chain extender/endcapping solution of 11.9 bis(trimethoxysilylpropyl)amine (available from GE Advanced Materials under the designation Silquest® A-1170), 12.1 g N,N'-diethyl-1,3-propanediamine, 1.2 g ethylbutylamine, 55.0 g isopropanol and 55.0 g acetone was mixed at 500 rpm. At this point the prepolymer was rapidly added to the chain extender/end-capping solution and agitation continued for 1 hour. The reaction product contained 1.7 wt% silicon (Si) based upon total solids content and 66.8 mole % urea. Approximately a 25 g sample of the reaction product was dissolved in 30 g of ethyl acetate and 1.8 g water, then flow coated onto cold roll steel panels (available from Act Laboratories, Inc. under the designation APR10009) followed by a cure regimen of 15 minutes at approximately 80 °C, 3 days immersed in water then paper towel dried and placed in an oven for 45 minutes set at 80 °C. Panels were immersed in toluene, methanol and 5 wt% sodium chloride for 24 hrs, then tested for 9.5 mm (3/8 inch) radius 180° bend, cross-hatch adhesion, pencil hardness. The sodium chloride exposed panel was scribed prior to immersion. All panels and the control panel passed the 9.5 mm (3/8 inch) bend without loss of adhesion and cross-hatch adhesion 5B. No loss of adhesion observed for sodium chloride exposed panel. Pencil hardness was 6H for the control, 4H for xylene panel and 5H the methanol panels tested within 15 minutes after removal.

### Example 3

To a 250 ml reaction vessel equipped with mixing capability; condenser, nitrogen atmosphere and heating was added 27.5 g of hydroxyl terminated polycaprolactone (Capa 2077) containing a hydroxyl number of 149.7, 22.5 g of hydroxyl terminated polycaprolactone (Capa 3091) containing a hydroxyl number of 57.1, and 34.5 g ethyl acetate. The mixture was reflux dried for one hour then cooled to approximately 65 °C at which temperature 0.08 g of a 1 wt% solution of dimethylbis[(1-oxoneodecyl)oxy]stannane was added followed by drop wise addition of 32.5 g of isophorone diisocyanate with agitation. The calculated NCO/OH ratio was 3.0. The temperature was held at approximately 65 °C for 2.5 hours. The wt% NCO was determined per standard methodology to be 5.9 wt%. The heat source was removed and the prepolymer cooled to approximately room temperature. In a separate 500 ml reaction vessel equipped as described above a chain extender/end-capping solution of 8.4 bis(trimethoxysilylpropyl)amine endcapping agent (Silquest A-1170), 9.1 g N,N'-diethyl-1,3-propanediamine chain extender, 30.0 g isopropanol and 40.0 g acetone was mixed at 500 rpm. At this point the prepolymer was rapidly added to the chain extender/end-capping solution and agitation continued for 1 hour. The reaction product contained 1.6 wt% silicon (Si) based upon total solids content and 66.7 mole % urea. Approximately a 25 g sample of the reaction product was dissolved in 35 g of ethyl acetate, 0.24 g of a 1 wt% toluene solution of dimethylbis[(1-oxoneodecyl)oxy]stannane, 1.8 g water then flow coated onto cold roll steel panels (Act Laboratories, Inc. APR10009) followed by a cure regimen of 15 minutes at approximately 80 °C. These were immersed in water for three days then paper towel dried and placed in an oven for 45 minutes set at 80 °C. Panels were immersed in toluene, methanol and 5 wt% sodium chloride for 24 hrs then tested for 9.5 mm (3/8 inch) radius 180° bend and cross-hatch adhesion. The sodium chloride exposed panel was scribed prior to immersion. All panels and the control panel passed the 9.5 mm (3/8 inch) bend without loss of adhesion and cross-hatch adhesion results were 5B. The panel exposed to sodium chloride exhibited extensive pinholes.

### Example 4

To a 250 ml reaction vessel equipped with mixing capability, condenser, nitrogen atmosphere and heating was added 50.0 g of hydroxyl terminated polycaprolactone (Capa 2077) containing a hydroxyl number of 149.7, 61.9 g ethyl acetate. The mixture was reflux dried for one hour then cooled to approximately 65 °C at which temperature 0.19 g of a 1 wt% solution of dimethylbis[(1-oxoneodecyl)oxy]stannane was added followed by drop wise addition of 41.3 g of isophorone diisocyanate with agitation. The calculated NCO/OH ratio was 2.75. The temperature was held at approximately 65 °C for 2.5 hours. The wt% NCO was determined per standard methodology to be 6.2 wt%. The heat source was removed and the prepolymer cooled to approximately room temperature. In a separate 500 ml reaction vessel equipped as described above a chain extender/end-capping solution of 6.9 g bis(trimethoxysilylpropyl)amine (Silquest A-1170), 26.5 g N-isopropyl(5-amino)-1,3,3-trimethylcyclohexanemethyl-N'-isopropylamine chain extender (available from Huntsman LLC under the designation JEFFLINK 754), 95.0 g isopropanol and 95.0 g acetone was mixed at 500 rpm. At this point the prepolymer was rapidly added to the chain extender/end-capping solution and agitation continued for 1 hour. The reaction product contained 0.9 wt% silicon (Si) based upon total solids content and 62.8 mole % urea. Approximately a 25 g sample of the reaction product was dissolved in 35 g of ethyl acetate, 0.24 g of a 1 wt% toluene solution of dimethylbis[(1-oxoneodecyl)oxy]stannane, 1.8 g water then flow coated onto cold roll steel panels (Act Laboratories, Inc. APR 10009) followed by a cure regimen of 15 minutes at approximately 80 °C. These were immersed in water for three days then paper towel dried and placed into an oven for 45 minutes set at 80 °C. Panels were immersed in toluene, methanol and 5 wt% sodium chloride for 24 hrs then tested for 9.5mm (3/8 inch) radius 180° bend and cross-hatch adhesion. The sodium chloride exposed panel was scribed prior to immersion. All panels and the control panel passed the 9.5mm (3/8 inch) bend without loss of adhesion and cross-hatch adhesion results were 5B. The sodium chloride panel passed and did not exhibit pinholes.

### Example 5

To a 250 ml reaction vessel equipped with mixing capability, condenser, nitrogen atmosphere and heating was added 15.0 g of hydroxyl terminated poly(diethylene glycol glycerine adipate) (Lexorez 1842-90) with functionality of 4.2 containing a hydroxyl number of 97, 35.0 g of hydroxyl terminated poly(1,4-butandiol neopentyl glycol adipate) (Lexorez 1640-150) with a functionality of 2 containing a hydroxyl number of 145, 41.4 g ethyl acetate. The mixture was reflux dried for one hour then cooled to approximately 75 °C at which temperature 0.5 g of a 1 wt% solution of dimethylbis[(1-oxoneodecyl)oxy]stannane was added followed by drop wise addition of 39.3 g of isophorone diisocyanate with agitation. The calculated NCO/OH ratio was 3.0. The temperature was held at approximately 75 °C for 3.5 hours. The wt% NCO was determined per standard methodology to be 7.5 wt%. The heat source was removed and the prepolymer cooled to approximately room temperature. In a separate 500 ml reaction vessel equipped as described above a chain extender/end-capping solution of 11.4 g bis(trimethoxysilylpropyl)amine end capping agent (Silquest® A-1170), 11.6 g N,N'-diethyl-1,3-propanediamine chain extender, 55.0 g isopropanol and 55.0 g acetone was mixed at 500 rpm. At this point the prepolymer was rapidly added to the chain extender/end-capping solution and agitation continued for 2 hour after heating to approximately 65 °C. The reaction product contained 1.6 wt% silicon (Si) based upon total solids content and 63.9 mole % urea. Approximately a 25 g sample of the reaction product was dissolved in 15 g of ethyl acetate, 0.24 g of a 1 wt% toluene solution of dimethylbis[(1-oxoneodecyl)oxy]stannane, 1.8 g water then flow coated onto cold roll steel panels (Act Laboratories, Inc. APR10009) followed by a cure regimen of 15 minutes at approximately 80 °C. These were immersed in water for two days then paper towel dried then placed into an oven for 45 minutes set at 80 °C. Panels were immersed in toluene, methanol and 5 wt% sodium chloride for 24 hrs then tested for 9.5mm (3/8 inch) radius 180° bend and cross-hatch adhesion. The sodium chloride exposed panel was scribed prior to immersion. All panels and the control panel passed the 9.5mm (3/8 inch) bend without loss of adhesion and cross-hatch adhesion results were 5B. The sodium chloride panel passed and did not exhibit pinholes. Panels immersed in toluene and methanol showed no loss in adhesion or any change in the coating versus the control.

### Example 6

To a 250 ml reaction vessel equipped with mixing capability, condenser, nitrogen atmosphere and heating was added 20.0 g of hydroxyl terminated poly(diethylene glycol glycerine adipate) (Lexorez 1842-90) with functionality of 4.2 containing a hydroxyl number of 97, 30.0 g of hydroxyl terminated poly(1,4-butandiol neopentyl glycol adipate) (Lexorez 1640-150) with a functionality of 2 containing a hydroxyl number of 145, 110.0 g ethyl acetate. The mixture was reflux dried for one hour then cooled to approximately 75 °C at which temperature 0.31 g of a 1 wt% solution of dimethylbis[(1-oxoneodecyl)oxy]stannane was added followed by drop wise addition of 25.2 g of isophorone diisocyanate with agitation. The calculated NCO/OH ratio was 2.0. The temperature was held at approximately 75 °C for 3 hours. The wt% NCO was determined per standard methodology to be 2.4 wt%. The heat source was removed and the prepolymer cooled to approximately room temperature. In a separate 500 ml reaction vessel equipped as described above a chain extender/end-capping solution of 5.4 g bis(trimethoxysilylpropyl)amine (Silquest® A-1170), 11.0 g N-isopropyl(5-amino)-1,3,3-trimethylcyclohexanemethyl-N'-isopropylamine (JEFFLINK 754), 0.5 g ethylbutylamine, and 300.0 g methylisobutylketone was mixed at 500 rpm. At this point the prepolymer was rapidly added to the chain extender/end-capping solution and agitation continued for 2 hours after reaching a temperature of approximately 65 °C. The reaction product contained 1.0 wt% silicon (Si) based upon total solids content and 47.3 mole % urea. Approximately a 25 g sample of the reaction product was dissolved in 35 g of ethyl acetate, 0.24 g of a 1 wt% toluene solution of dimethylbis[(1-oxoneodecyl)oxy]stannane, 1.8 g water then flow coated onto cold roll steel panels (Act Laboratories, Inc. APR10009) followed by a cure regimen of 15 minutes at approximately 80 °C. These were immersed in water for three days then paper towel dried and placed into an oven for 45 minutes set at 80 °C. Panels were immersed in toluene, methanol and 5 wt% sodium chloride for 24 hrs then tested for 9.5mm (3/8 inch) radius 180° bend and cross-hatch adhesion. The sodium chloride exposed panel was scribed prior to immersion. The sodium chloride panel passed and did not exhibit pinholes. All panels and the control panel passed the 9.5mm (3/8 inch) bend without loss of adhesion and cross-hatch adhesion results were 5B, pencil hardness was 8H.

### Comparative Example 7

To a 250 ml reaction vessel equipped with mixing capability, condenser, nitrogen atmosphere and heating was added 20.0 g of hydroxyl terminated poly(diethylene glycol glycerine adipate) (Lexorez 1842-90) with functionality of 4.2 containing a hydroxyl number of 97, 30.0 g of hydroxyl terminated poly(1,4-butandiol neopentyl glycol adipate) (Lexorez 1640-150) with a functionality of 2 containing a hydroxyl number of 145, 60.0 g ethyl acetate. The mixture was reflux dried for one hour then cooled to approximately 75 °C at which temperature 0.36 g of a 1 wt% solution of dimethylbis[(1-oxoneodecyl)oxy]stannane was added followed by drop wise addition of 37.8 g of isophorone diisocyanate with agitation. The calculated NCO/OH ratio was 3.0. The temperature was held at approximately 75 °C for 3 hours. The wt% NCO was determined per standard methodology to be 7.0 wt%. The heat source was removed and the prepolymer cooled to approximately room temperature. In a separate 500 ml reaction vessel equipped as described above a chain extender/end-capping solution of 19.2 g N-isopropyl(5-amino)-1,3,3-trimethylcyclohexanemethyl-N'-isopropylamine (JEFFLINK 754), 10.0 g ethylbutylamine, and 115.0 g ethyl acetate was mixed at 500 rpm. At this point the prepolymer was rapidly added to the chain extender/end-capping solution and agitation continued for 2 hours at room temperature. The reaction product contained 66.8 mole% urea but no silicon. Approximately a 25 g sample of the reaction product was dissolved in 21 g of ethyl acetate, 0.4 g of a 1 wt% toluene solution of dimethylbis[(1-oxoneodecyl)oxy]stannane, 0.2 g water, thoroughly shaken then flow coated onto cold roll steel panels (Act Laboratories, Inc. APR10009) followed by a cure regimen of 15 minutes at approximately 80 °C. These were immersed in water for four days then paper towel dried and placed into an oven for 45 minutes set at 80 °C. Panels were immersed in toluene, methanol and 5 wt% sodium chloride for 24 hrs then tested for 9.5 mm (3/8 inch) radius 180° bend, pencil hardness and cross-hatch adhesion. The sodium chloride exposed panel was scribed prior to immersion. The coating remained tacky and dissolved in toluene and methanol.

### Examples 8-13

These examples illustrate the influence of the selection of the chain extender on solvent resistance. Selection of polyether functional secondary diamine chain extenders like those below result in poor solvent resistance. In Table 1 below the Versalink® components are polytetramethyleneoxide-di-p-aminobenzoates available from Air Products Co.; the XJT components are secondary polyether diamines available from Huntsman LLC.

The prepolymer of Example 6 and the procedure described above was repeated for Examples 8-13, except that different chain extenders were used. In a 1.2 dl (4 oz.) jar with magnetic bar stirring the prepolymer was added to a solution composition given in Table 1 below. Test results are also presented in Table 1.

**Table 1**

| | 9 | 9 | 10 | 11 | 12 | 13 |
|---|---|---|---|---|---|---|
| *Example* | | | | | | |
| Example 6 prepolymer | 20.0 g | 20.0 g | 20.0 g | 20.0 g | 20.0 g | 20.0 g |
| Ethyl Acetate | 17.2 g | 17.2 g | 17.2 g | 17.2 g | 17.2 g | 17.2 g |
| Silquest A-1170 | 1.4 g | 1.8 g | 2.1 g | 2.8 g | 1.3 g | 1.4 g |
| Ethylbutyl amine | | | | | | 0.4 g |
| Versalink P250 | 8.2 g | | | | | |
| Versalink P650 | | 14.8 g | | | | |
| Versalink P1000 | | | 21.0 g | | | |
| XTJ-576 | | | | 32.5 g | | |
| XTJ-584 | | | | | 6.4 g | |
| XTJ-585 | | | | | | 8.7 g |
| *Wt% Silicon (Si) | 0.9 | 0.9 | 0.9 | 0.9 | 0.9 | 0.9 |
| Mole% Urea | 66.9 | 62.5 | 72.0 | 78.1 | 66.7 | 66.7 |
| Observations: | Fisheye | Fisheye | | | | |
| Pencil Hardness | 6H | Tacky | Tacky | Tacky | 6H | 6H |
| Crosshatch Adhesion | 5B | Not Tested | Not Tested | Not Tested | 5B | 5B |
| 3/8" 180° Bend Adhesion | Passed | Not Tested | Not Tested | Not Tested | Passed | Passed |
| Toluene Immersion, 24 hrs. | Passed | Failed | Failed | Failed | Softens | Softens |

| | | | | | | |
|---|---|---|---|---|---|---|
| * wt% silicon based on 100% solids content 3/8" = 9.5 mm | | | | | | |

### Example 14

To a 500 ml reaction vessel equipped with mixing capability, condenser, nitrogen atmosphere and heating was added 90.0 g of hydroxyl terminated poly(diethylene glycol glycerine adipate) (Lexorez 1842-90) with functionality of 4.2 containing a hydroxyl number of 97, 90.0 g ethyl acetate. The mixture was reflux dried for one hour then cooled to approximately 75 °C at which temperature 0.58 g of a 1 wt% solution of dimethylbis[(1-oxoneodecyl)oxy]stannane was added followed by drop wise addition of 52.5 g of isophorone diisocyanate with agitation. The calculated NCO/OH ratio was 3.0. The temperature was held at approximately 75 °C for 3 hours. The wt% NCO was determined per standard methodology to be 5.35 wt%. The heat source was removed and the prepolymer cooled to approximately room temperature. In a separate 500 ml reaction vessel equipped as described above a chain extender/end-capping solution of 4.3 g bis(trimethoxysilylpropyl)amine (Silquest® A-1170), 1.3 g N-isopropyl(5-amino)-1,3,3-trimethylcyclohexanemethyl-N'-isopropylamine (JEFFLINK 754), 10.6 g ethylbutylamine, and 82.0 g ethyl acetate was mixed at 500 rpm. At this point 100.0 g of the prepolymer was rapidly added to the chain extender/end-capping solution and agitation continued for 2 hours at room temperature. The reaction product contained 0.9 wt% silicon (Si) based upon total solids content and 63.4 mole % urea. Approximately a 25 g sample of the reaction product was dissolved in 21 g of ethyl acetate, 0.4 g of a 1 wt% toluene solution of dimethylbis[(1-oxoneodecyl)oxy]stannane, 0.2 g water, thoroughly shaken then flow coated onto cold roll steel panels (Act Laboratories, Inc. APR10009) followed by a cure regimen of 15 minutes at approximately 80 °C. These were immersed in water for four days then paper towel dried and placed into an oven for 45 minutes set at 80 °C. The panels were immersed in tolene, methanol and 5 wt% sodium chloride for 24 hrs then tested for 9.5mm (3/8 inch) radius 180° bend, pencil hardness and cross-hatch adhesion. The sodium chloride exposed panel was scribed prior to immersion. The sodium chloride panel passed and was pinhole free. All panels and the control panel passed the 9.5mm (3/8 inch) bend without loss of adhesion, cross-hatch adhesion was 5B, and pencil hardness 5H.

### Comparative Example 15

In a separate 500 ml reaction vessel equipped as described above a chain extender/end-capping solution of 1.3 g N-isopropyl(5-amino)-1,3,3-trimethylcyclohexanemethyl-N'-isopropylamine (JEFFLINK 754)⁴, 11.9 g ethylbutylamine, and 82.0 g ethyl acetate was mixed at 500 rpm. At this point 100.0 g of the prepolymer from Example 14 was rapidly added to the chain extender/endcapping solution and agitation continued for 2 hours at room temperature. The reaction product contained 63.4 mole % urea but no silicon. Approximately a 25 g sample of the reaction product was dissolved in 21 g of ethyl acetate, 0.4 g of a 1 wt% toluene solution of dimethylbis[(1-oxoneodecyl)oxy]stannane, 0.2 g water, thoroughly shaken then flow coated onto cold roll steel panels (Act Laboratories, Inc. APR10009) followed by a cure regimen of 15 minutes at approximately 80 °C. These were immersed in water for four days then paper towel dried and placed into an oven for 45 minutes set at 80 °C. Panels were immersed in toluene, methanol and 5 wt% sodium chloride for 24 hrs then tested for 9.5mm (3/8 inch) radius 180° bend, pencil hardness and cross-hatch adhesion. The sodium chloride exposed panel was scribed prior to immersion. The coating dissolved in toluene and methanol. The sodium chloride coating exhibited tackiness.

### Examples 16-20

This example illustrates an alternative catalyst and variation in the percentage of silane in the coating.

To a 500 ml reaction vessel equipped with mixing capability, condenser, nitrogen atmosphere and heating was added 40.0 g of hydroxyl terminated poly(diethylene glycol glycerine adipate) (Lexorez 1842-90) with functionality of 4.2 containing a hydroxyl number of 97, 60.0 g of hydroxyl terminated poly(1,4-butandiol neopentyl glycol adipate) (Lexorez 1640-150) with a functionality of 2 containing a hydroxyl number of 145, 175.0 g ethyl acetate. The mixture was reflux dried for one hour then cooled to approximately 75 °C at which temperature 0.30 g of 4,4'-(oxydi-2,1-ethanediyl)bismorpholine was added followed by drop wise addition of 50.5 g of isophorone diisocyanate with agitation. The calculated NCO/OH ratio was 2.0. The temperature was held at approximately 75 °C for 5 hours. The wt% NCO was determined per standard methodology to be 2.4 wt%. The heat source was removed and the prepolymer cooled to approximately room temperature. At this point 20.0 g of the prepolymer was rapidly added to 10.8 g methylethylketone solution containing the chain extender/end-capping solution (Silquest A-1170, JEFFLINK 754) as specified in Table 2 below and agitated using magnetic bar stirring for one hour at room temperature. Samples were then placed in a 60 °C for two hours. Approximately a 25 g sample of the reaction product was thoroughly mixed with 1.0 g water and 0.4 g of a 1 wt% toluene solution of dimethylbis[(1-oxoneodecyl)oxy]stannane, 0.2 g water, then flow coated onto cold roll steel panels (Act Laboratories, Inc. APR10009). Panels followed a cure regimen of 15 minutes at approximately 80 °C, immersed in water for two days then paper towel dried and placed into an oven for 45 minutes set at 80 °C. Cured panels were immersed in toluene, methanol and 5 wt% sodium chloride for 24 hrs then tested for 9.5mm (3/8 inch) radius 180° bend, pencil hardness and cross-hatch adhesion. The sodium chloride exposed panel was scribed prior to immersion.

**Table 2**

| Example | Wt% Silicon* | Silquest A-1170, 9 | JEFFLINK 754, g | Crosshatch Adhesion | Pencil Hardness | 24 hr. Toluene | 24 hrs. Methanol | 24 hrs. 5% NaCl aq |
|---|---|---|---|---|---|---|---|---|
| 16 | 0.09 | 0.06 | 1.47 | 5B | 9H | Passed | Passed | Passed |
| 17 | 0.30 | 0.2 | 1.42 | 5B | 9H | Passed | Passed | Passed |
| 18 | 0.59 | 0.22 | 1.35 | 5B | 9H | Passed | Passed | Passed |
| 19 | 0.88 | 0.59 | 1.27 | 5B | 6H | Passed | Passed | Passed |
| 20 | 1.69 | 1.19 | 1.04 | 5B | H | Passed | Passed | Passed |

| | | | | | | | | |
|---|---|---|---|---|---|---|---|---|
| * wt% silicon based on 100% solids content | | | | | | | | |

### Example 21

A sample was prepared similar to that of Example 19 except that the chain extender/end capper solution was added to the prepolymer. The sample was placed in a 60°C oven for two hours. Approximately a 25 g sample of the reaction product was thoroughly mixed with 1.0 g water and 0.4 g of a 1 wt% toluene solution of dimethylbis[(1-oxoneodecyl)oxy]stannane, 0.2 g water, then flow coated onto cold roll steel panels (Act Laboratories, Inc. APR10009). Panels followed a cure regimen of 15 minutes at approximately 80 °C, immersed in water for two days then paper towel dried and placed into an oven for 45 minutes set at 80 °C. Cured panels were immersed in toluene, methanol and 5 wt% sodium chloride for 24 hrs then tested for 9.5 mm (3/8 inch) radius 180° bend, pencil hardness and cross-hatch adhesion. The sodium chloride exposed panel was scribed prior to immersion. The sodium chloride panel passed and did not exhibit pinholes. All panels and the control panel passed the 9.5mm (3/8 inch) bend without loss of adhesion, and cross hatch adhesion results were 5B, pencil hardness 8H. A sample was isolated from the solvent and yielded a pliable solid.

### Comparative Example 22

To a 250 ml reaction vessel equipped with mixing capability, condenser, nitrogen atmosphere and heating was added 100.0 g of hydroxyl terminated poly(1,4-butandiol neopentyl glycol adipate) (Lexorez 1640-150) with a functionality of 2 containing a hydroxyl number of 145, 179.0 g ethyl acetate. The mixture was reflux dried for one hour then cooled to approximately 75 °C at which temperature 0.51 g of a 1 wt% solution of dimethylbis[(1-oxoneodecyl)oxy]stannane was added followed by drop wise addition of 25.0 g of isophorone diisocyanate with agitation. The calculated NCO/OH ratio was 0.86. The temperature was held at approximately 75 °C for 3 hours. The wt% NCO was determined per standard methodology to be 0.0 wt%. The heat source was removed and cooled to approximately room temperature. The reaction product contained no silicon and no urea. Approximately a 25 g sample of the reaction product was dissolved in 35 g of ethyl acetate, 0.24 g of a 1 wt% toluene solution of dimethylbis[(1-oxoneodecyl)oxy]stannane, 1.5 g water then flow coated onto cold roll steel panels (Act Laboratories, Inc. APR10009) followed by a cure regimen of 15 minutes at approximately 80 °C. These were immersed in water for three days then paper towel dried and placed into an oven for 45 minutes set at 80 °C. The panels were immersed in toluene, methanol and 5 wt% sodium chloride for 24 hrs then tested for 9.54mm (3/8 inch) radius 180° bend and cross-hatch adhesion. The sodium chloride exposed panel was scribed prior to immersion. All panel coatings remained tacky and were easily removed in the solvents. No further testing was conducted.

### Example 23

To a 1000 ml reaction vessel equipped with mixing capability, condenser, nitrogen atmosphere and heating was added 130.0 g of hydroxyl terminated poly(diethylene glycol glycerine adipate) (Lexorez 1842-90) with functionality of 4.2 containing a hydroxyl number of 97, 195.0 g of hydroxyl terminated poly(1,4-butandiol neopentyl glycol adipate) (Lexorez 1640-150) with a functionality of 2 containing a hydroxyl number of 145, 250.0 g ethyl acetate. The mixture was reflux dried for one hour then cooled to approximately 75 °C at which temperature 0.49 g of a 10 wt% ethyl acetate solution of 4,4'-(oxydi-2,1-ethanediyl)bismorpholine was added followed by drop wise addition of 164.0 g of isophorone diisocyanate with agitation. The calculated NCO/OH ratio was 2.0. The temperature was held at approximately 70 °C for 4 hours. The wt% NCO was determined per standard methodology to be 4.3 wt%. The heat source was removed and the prepolymer cooled to approximately room temperature. At this point 250.0 g of the prepolymer was transferred to a 1000 ml flask equipped with agitation, nitrogen atmosphere, and addition funnel. A solution of 150.0 g ethyl acetate and 23.0 g chain extender (JEFFLINK® 754) was prepared and added to the addition funnel. At 700 rpm the chain extender was added slowly over approximately a 5 hour period to provide a chain extended prepolymer. Agitation was continued for 1 hour after addition completed after which an endcapper comprising 10.5 g of Silquest A-1170 and 5.1 g ethylbutylamine was added drop wise over a 1 hour period to provide an endcapped chain extended polymer product in solution. The reaction product was heated for 2 hours at 60°C to 65°C. Table 3 below sets forth the weight percent of solids, viscosity, and number average molecular weights for the prepolymer, the chain-extended prepolymer, and the end-capped polymer product of this example in solution. The number average molecular weights set forth in Table 3 are calculated estimates.

**Table 3**

| | Wt. % Solids | Viscosity, cp | Molecular weight (Mn) |
|---|---|---|---|
| Prepolymer | 66.3 | 242 | 1874* |
| Chain extended prepolymer | 41.1 | 1488 | 15,037* |
| End-capped chain-extended polymer | 28.5 | 434 | 15,896* |

| | | | |
|---|---|---|---|
| *Calculated estimates 1cp = 1m Pa·s | | | |

While the above description contains many specifics, these specifics should not be construed as limitations of the invention, but merely as exemplifications of preferred embodiment thereof.

## Claims

1. A method for making a moisture-curable silane-terminated polymer comprising:
a) reacting a polyol, polyisocyanate, and polyamine together to provide an isocyanate-terminated polyurethane-polyurea prepolymer with at least two urethane linkages and at least two urea linkages in the prepolymer chain of the polymer;
b) capping at least a portion of the prepolymer polymer provided in step (a) with a silane possessing at least one alkoxy group to provide the moisture-curable silane-terminated polymer
wherein the polyamine is a secondary diamine.

2. The method of claim 1 wherein the reacting step (a) is performed by
(i) reacting a polyol with a molar excess of a compound having at least two isocyanate groups to provide an isocyanate-terminated polyurethane; and,
(ii) reacting a polyamine with a molar excess of the isocyanate-terminated polyurethane of step (i) to provide the isocyanate-terminated polyurethane-polyurea prepolymer.
and step (b) is performed by reacting the isocyanate terminated polyurethane polyurea prepolymer with an aminosilane.

3. The method of claim 1 wherein the reacting step (a) is performed by
(i) reacting a polyamine with a molar excess of a compound having at least two isocyanate groups capable of reacting with the amine groups of the polyamine to provide an isocyanate-terminated polyurea; and,
(ii) reacting a polyol with a molar excess of the isocyanate-terminated polyurea of step (i) to provide the isocyanate-terminated polyurethane-polyurea prepolymer
and step (b) is performed by reacting the isocyanate terminated polyurethane-polyurea prepolymer with an aminosilane.

4. The method of claim 1 wherein the reacting step (a) is performed by a single step of reacting the polyol, polyisocyanate and polyamine together.

5. The method of claim 1 wherein the polyol comprises one or more members of the group consisting of polyester polyols, polyetherester polyols, polyesterether polyols, polycaprolactone and poly(meth)acrylate polyols, hydroxyl-terminated saturated or unsaturated hydrocarbon polymers, polyhydroxy polycarbonates, polyhydroxy polyacetals, polyhydroxy polyester amides, polyhydroxy polyamides, polyhydroxy polythioethers and alkanolamines.

6. The method of claim 1 wherein the polyisocyanate comprises one or more members of the group consisting of 2,4-toluene diisocyanate, 2,6-toluene diisocyanate, 4,4'-diphenylmethanediisocyanate, 2,4-diphenylmethanediisocyanate, isophorone diisocyanate and dicyclohexylmethane-4,4'-diisocyanate.

7. The method of claim 1 wherein the polyamine has the formula
R¹HN-R-NHR²
wherein R, R¹ and R² are independently selected from any alkyl aryl or alkylene group having from 2 to 20 carbon atoms.

8. The method of claim 1 wherein the polyamine is N-isopropyl(5-amino)-1,3,3-trimethylcyclohexanemethyl-N'-isopropylamine.

9. The method of claim 1 wherein the silane is a member selected from the group consisting of N-methyl-3-amino-2-methylpropyltrimethoxysilane, N-ethyl-3-amino-2-methylpropyltrimethoxysilane, N-ethyl-3-amino-2-methylpropyldiethoxymethylsilane, N-ethyl-3-amino-2-methylpropyltriethoxysilane, N-ethyl-3-amino-2-methylpropylmethyldimethoxysilane, N-butyl-3-amino-2-methylpropyltrimethoxysilane, 3-(N-methyl-2-amino-1-methyl-1-ethoxy)-propyltrimethoxysilane, N-ethyl-4-amino-3,3-dimethylbutyldimethoxymethylsilane, N-ethyl-4-amino-3,3-dimethylbutyltrimethoxysilane, bis-(3-trimethoxysilyl-2-methylpropyl)amine and N-(3'-trimethoxysilylpropyl)-3-amino-2-methylpropyltrimethoxysilane, phenyl amino propyl trimethoxy silane, methyl amino propyl trimethoxy silane, n-butyl amino propyl trimethoxy silane, t-butyl amino propyl trimethoxy silane, cyclohexyl amino propyl trimethoxy silane, dibutyl maleate amino propyl trimethoxy silane, dibutyl maleate substituted 4-amino 3,3-dimethyl butyl trimethoxy silane, amino propyl triethoxy silane, N-methyl-3-amino-2-methylpropyltrimethoxysilane, N-ethyl-3-amino-2-methylpropyltrimethoxysilane, N-ethyl-3-amino-2-methylpropyldiethoxysilane, N-ethyl-3-amino-2-methylpropyltri-ethoxysilane, N-ethyl-3-amino-2-methylpropylmethyldimethoxysilane, N-butyl-3-amino-2-methylpropyltrimethoxysilane, 3-(N-methyl-3-amino-l-methyl-l-ethoxy)propyltrimethoxysilane, N-ethyl-4-amino-3,3-dimethylbutyldimethoxymethylsilane, N-ethyl-4-amino-3,3-dimethylbutyltrimethoxysilane, bis-(3-trimethoxysilyl-2-methylpropyl)amine, N-(3'-trimethoxysilylpropyl)-3-amino-2-methylpropyltrimethoxysilane, N,N-bis[(3-triethoxysilyl)propyl]amine, N,N-bis[(3-tripropoxy-silyl)propyl]amine, N-(3-trimethoxysilyl)propyl-3-[N-(3-trimethoxysilyl)-propylamino]propionamide, N-(3-triethoxysilyl)propyl-3-[N-3-triethoxysilyl]-propylamino]propionamide, N-(3-trimethoxysilyl)propyl-3-[N-3-triethoxysilyl]-propylamino]propionamide, 3-trimethoxysilylpropyl 3-[N-(3-trimethoxysilyl)-propylamino]-2-methyl propionate, 3-triethoxysilyipropyl 3-[N-(3-triethoxysily)-propylamino]-2-methyl propionate, 3-trimethoxysilypropyl 3-[N-(3-triethoxysilyl)-propylamino]-2-methyl propionate, gamma-mercaptopropyl-trimethoxysilane and N,N'-bis((3-trimethoxysilyl)propyl)amine.

10. The method of claim 1 further including capping at least a second portion of the isocyanate-terminated polyurethane-polyurea polymer with a non-silicon containing monoamine.

11. The method of claim 10 wherein the non-silicon containing monoamine is an alkylamine.

12. The method of claim 2 wherein the step (i) of reacting the polyol is performed in the presence of a catalyst.

13. The method of claim 12 wherein the catalyst is a member selected from the group consisting of dibutyltin dilaurate, dibutyltin acetate, tertiary amines, stannous octoate, stannous acetate, dimethylbis[(1-oxoneodecyl)oxy]stannane, 4,4'-(oxydi-2,1-ethanediyl)bismorpholine, N-methylmorpholine, bis(2-dimethylaminoethyl)ether, triethylenediamine, benzyldimethylamine and N,N'-dimethylpiperazine.

14. A moisture-curable composition made by the process of claim 1 comprising a silane-terminated polymer containing at least two urethane linkages and at least two urea linkages in the polymer chain and possessing a number average molecular weight of from 15,000 to 50,000.

15. A method for treating the surface of a substrate comprising:
a) applying the moisture-curable composition of claim 14; and,
b) curing said composition.

## Patentansprüche

1. Verfahren zum Herstellen eines feuchtigkeitshärtenden silanterminierten Polymers, welches umfasst:
a) miteinander zur Reaktion bringen eines Polyols, Polyisocyanats und Polyamins, um ein isocyanatterminiertes Polyurethan-Polyharnstoff-Präpolymer mit mindestens zwei Urethanbindungen und mindestens zwei Harnstoffbindungen in der Präpolymerkette des Polymers vorzusehen;
b) Verkappen mindestens eines Teils des in Schritt (a) vorgesehenen Präpolymerpolymers mit einem Silan, das mindestens eine Alkoxygruppe besitzt, um das feuchtigkeitshärtende silanterminierte Polymer vorzusehen,
wobei das Polyamin ein sekundäres Diamin ist.

2. Verfahren nach Anspruch 1, wobei der Schritt des zur Reaktion Bringens (a) durchgeführt wird durch
(i) durch zur Reaktion bringen eines Polyols mit einem Molüberschuss einer Verbindung mit mindestens zwei Isocyanatgruppen, um ein isocyanatterminiertes Polyurethan vorzusehen; und
(ii) zur Reaktion bringen eines Polyamins mit einem Molüberschuss des isocyanatterminierten Polyurethans von Schritt (i), um das isocyanatterminierte Polyurethan-Polyharnstoff-Präpolymer vorzusehen, und Schritt (b) durch zur Reaktion Bringen des isocyanatterminierten Polyurethan-Polyharnstoff-Präpolymers mit einem Aminosilan durchgeführt wird.

3. Verfahren nach Anspruch 1, wobei der Schritt des zur Reaktion Bringens (a) durchgeführt wird durch
(i) zur Reaktion Bringen eines Polyamins mit einem Molüberschuss einer Verbindung mit mindestens zwei Isocyanatgruppen, die mit den Amingruppen des Polyamins reagieren können, um einen isocyanatterminierten Polyharnstoff vorzusehen; und
(ii) zur Reaktion Bringen eines Polyols mit einem Molüberschuss des isocyanatterminierten Polyharnstoffs von Schritt (i), um das isocyanatterminierte Polyurethan-Polyharnstoff-Präpolymer vorzusehen,
und Schritt (b) durch zur Reaktion Bringen des isocyanatterminierten Polyurethan-Polyharnstoff-Präpolymers mit einem Aminosilan durchgeführt wird.

4. Verfahren nach Anspruch 1, wobei der Schritt des zur Reaktion Bringens (a) durch einen einzigen Schritt des miteinander zur Reaktion Bringens des Polyols, Polyisocyanats und Polyamins durchgeführt wird.

5. Verfahren nach Anspruch 1, wobei das Polyol ein oder mehrere Mitglieder der Gruppe bestehend aus Polyesterpolyolen, Polyetheresterpolyolen, Polyesteretherpolyolen, Polycaprolacton und Poly(meth)acrylatpolyolen, hydroxylterminierten gesättigten oder ungesättigten Kohlenwasserstoffpolymeren, Polyhydroxy-Polycarbonaten, Polyhydroxy-Polyacetalen, Polyhydroxy-Polyesteramiden, Polyhydroxy-Polyamiden, Polyhydroxy-Polythioethern und Alkanolaminen umfasst.

6. Verfahren nach Anspruch 1, wobei das Polyisocyanat ein oder mehrere Mitglieder der Gruppe bestehend aus 2,4-Toluendiisocyanat, 2,6-Toluendiisocyanat, 4,4'-Diphenylmethandiisocyanat, 2,4-Diphenylmethandiisocyanat, Isophorondiisocyanat und Dicyclohexylmethan-4,4'-diisocyanat umfasst.

7. Verfahren nach Anspruch 1, wobei das Polyamin die Formel
R¹HN-R-NHR²
aufweist, wobei R, R¹ und R² aus einer beliebigen Alkylaryl- oder Alkylengruppe mit 2 bis 20 Kohlenstoffatomen unabhängig gewählt werden.

8. Verfahren nach Anspruch 1, wobei das Polyamin N-Isopropyl(5-amino)-1,3,3-trimethylcyclohexanmethyl-N'-isopropylamin ist.

9. Verfahren nach Anspruch 1, wobei das Silan ein Mitglied gewählt aus der Gruppe bestehend aus N-Methyl-3-amino-2-methylpropyltrimethoxysilan, N-Ethyl-3-amino-2-methylpropyltrimethoxysilan, N-Ethyl-3-amino-2-methylpropyldiethoxymethylsilan, N-Ethyl-3-amino-2-methylpropyltriethoxysilan, N-Ethyl-3-amino-2-methylpropyltrimethoxysilan, N-Ethyl-3-amino-2-methylpropylmethyldimethoxysilan, N-Butyl-3-amino-2-methylpropyltrimethoxysilan, 3-(N-Methyl-2-amino-1-methyl-1-ethoxy)-propyltrimethoxysilan, N-Ethyl-4-amino-3,3-dimethylbutyldimethoxymethylsilan, N-Ethyl-4-amino-3,3-dimethylbutyltrimethoxysilan, bis-(3-Trimethoxysilyl-2-methylpropyl)amin und N-(3'-Trimethoxysilylpropyl)-3-amino-2-methylpropyltrimethoxysilan, Phenylaminopropyltrimethoxysilan, Methylaminopropyltrimethoxysilan, n-Butylaminopropyltrimethoxysilan, t-Butylaminopropyltrimethoxysilan, Cyclohexylaminopropyltrimethoxysilan, Dibutylmaleataminopropyltrimethoxysilan, dibutylmaleatsubstitutiertes 4-Amino-3,3-dimethylbutyltrimethoxysilan, Aminopropyltriethoxysilan, N-Methyl-3-amino-2-methylpropyltrimethoxysilan, N-Ethyl-3-amino-2-methylpropyltrimethoxysilan, N-Ethyl-3-amino-2-methylpropyldiethoxysilan, N-Ethyl-3-amino-2-methylpropyltriethoxysilan, N-Ethyl-3-amino-2-methylpropylmethyldimethoxysilan, N-Butyl-3-amino-2-methylpropyltrimethoxysilan, 3-(N-Methyl-3-amino-1-methyl-1-ethoxy)propyltrimethoxysilan, N-Ethyl-4-amino-3,3-Dimethylbutyldimethoxymethylsilan, N-Ethyl-4-amino-3,3-dimethylbutyltrimethoxysilan, bis-(3-Trimethoxysilyl-2-methylpropyl)amin, N-(3'-Trimethoxysilylpropyl)-3-amino-2-methylpropyltrimethoxysilan, N,N-bis[(3-Triethoxysilyl)propyl]amin, N,N-bis[(3-Tripropoxy-silyl)propyl]amin, N-(3-Trimethoxysilyl)propyl-3-[N-(3-trimethoxysilyl)-propylamino]propionamid, N-(3-Triethoxysilyl)propyl-3-[N-3-triethoxysilyl]-Propylamino]propionamid, N-(3-Trimethoxysilyl)propyl-3-[N-3-triethoxysilyl]-propylamino]propionamid, 3-Trimethoxysilylpropyl-3-[N-(3-trimethoxysilyl)-propylamino]-2-methylpropionat, 3-Triethoxysilylpropyl-3-[N-(3-triethoxysilyl)-propylamino]-2-methylpropionat, 3-Trimethoxysilylpropyl-3-[N-(3-triethoxysilyl)-propylamino]-2-methylproprionat, Gamma-mercaptopropyl-trimethoxysilan und N,N'-bis((3-Trimethoxysilyl)propyl)amin ist.

10. Verfahren nach Anspruch 1, welches weiterhin das Verkappen mindestens eines zweiten Teils des isocyanatterminierten Polyurethan-Polyharnstoff-Polymers mit einem nicht Silicium enthaltenden Monoamin umfasst.

11. Verfahren nach Anspruch 10, wobei das nicht Silicium enthaltende Monoamin ein Alkylamin ist.

12. Verfahren nach Anspruch 2, wobei der Schritt (i) des zur Reaktion Bringens des Polyols bei Vorhandensein eines Katalysators durchgeführt wird.

13. Verfahren nach Anspruch 12, wobei der Katalysator ein Mitglied gewählt aus der Gruppe bestehend aus Dibutylzinndilaurat, Dibutylzinnacetat, tertiären Aminen, Zinnbis(2-ethylhexanoat), Zinn(II)-acetat, Dimethylbis[(1-oxoneodecyl)oxy]stannan, 4,4'-(oxydi-2,1-Ethandiyl)bismorpholin, N-Methylmorpholin, bis(2-Dimethylaminoethyl)ether, Triethylendiamin, Benzyldimethylamin und N,N'-Dimethylpiperazin ist.

14. Durch den Prozess von Anspruch 1 hergestellte feuchtigkeitshärtende Zusammensetzung, welche ein silanterminiertes Polymer umfasst, das mindestens zwei Urethanbindungen und mindestens zwei Harnstoffbindungen in der Polymerkette enthält und ein zahlengemitteltes Molekulargewicht von 15.000 bis 50.000 besitzt.

15. Verfahren zum Behandeln der Oberfläche eines Substrats, welches umfasst:
a) Aufbringen der feuchtigkeitshärtenden Zusammensetzung nach Anspruch 14; und
b) Härten der Zusammensetzung.

## Revendications

1. Procédé pour préparer un polymère à terminaison silane durcissable à l'humidité comprenant :
a) la réaction ensemble d'un polyol, d'un polyisocyanate et d'une polyamine pour former un prépolymère de polyuréthane-polyurée à terminaison isocyanate ayant au moins deux liaisons uréthane et au moins deux liaisons urée dans la chaîne prépolymère du polymère ;
b) le coiffage d'au moins une partie du polymère prépolymère obtenu dans l'étape (a) avec un silane possédant au moins un groupe alcoxy pour former le polymère à terminaison silane durcissable à l'humidité,
dans lequel la polyamine est une diamine secondaire.

2. Procédé selon la revendication 1, dans lequel l'étape de réaction (a) est effectuée par
(i) réaction d'un polyol avec un excès molaire d'un composé ayant au moins deux groupes isocyanate pour former un polyuréthane à terminaison isocyanate ; et
(ii) réaction d'une polyamine avec un excès molaire du polyuréthane à terminaison isocyanate de l'étape (i) pour former le prépolymère de polyuréthane-polyurée à terminaison isocyanate ;
et l'étape (b) est effectuée par réaction du prépolymère de polyuréthane-polyurée à terminaison isocyanate avec un aminosilane.

3. Procédé selon la revendication 1, dans lequel l'étape de réaction (a) est effectuée par
(i) réaction d'une polyamine avec un excès molaire d'un composé ayant au moins deux groupes isocyanate capables de réagir avec les groupes amine de la polyamine pour former une polyurée à terminaison isocyanate ; et
(ii) réaction d'un polyol avec un excès molaire de la polyurée à terminaison isocyanate de l'étape (i) pour former le prépolymère de polyuréthane-polyurée à terminaison isocyanate ;
et l'étape (b) est effectuée par réaction du prépolymère de polyuréthane-polyuréé à terminaison isocyanate avec un aminosilane.

4. Procédé selon la revendication 1, dans lequel l'étape de réaction (a) est effectuée par une seule étape de réaction ensemble du polyol, du polyisocyanate et de la polyamine.

5. Procédé selon la revendication 1, dans lequel le polyol comprend un ou plusieurs membres du groupe constitué par les polyester-polyols, les polyétherester-polyols, les polyesteréther-polyols, les polycaprolactone- et poly(méth)acrylate-polyols, les polymères hydrocarbonés saturés ou insaturés à terminaison hydroxyle, les polyhydroxy-polycarbonates, les polyhydroxy-polyacétals, les polyhydroxy-polyesteramides, les polyhydroxy-polyamides, les polyhydroxy-polythioéthers, et les alcanolamines.

6. Procédé selon la revendication 1, dans lequel le polyisocyanate comprend un ou plusieurs membres du groupe constitué par le diisocyanate de 2,4-toluène, le diisocyanate de 2,6-toluène, le diisocyanate de 4,4'-diphénylméthane, le diisocyanate de 2,4-diphénylméthane, le diisocyanate d'isophorone et le 4,4'-diisocyanate de dicyclohexylméthane.

7. Procédé selon la revendication 1, dans lequel la polyamine répond à la formule :
R¹HN-R-NHR²
dans laquelle R, R¹ et R² sont indépendamment choisis parmi n'importe quel groupe alkyle, aryle ou alkylène ayant de 2 à 20 atomes de carbone.

8. Procédé selon la revendication 1, dans lequel la polyamine est la N-isopropyl(5-amino)-1,3,3-triméthylcyclohexaneméthyl-N'-isopropylamine.

9. Procédé selon la revendication 1, dans lequel le silane est un membre choisi dans le groupe constitué par le N-méthyl-3-amino-2-méthylpropyltriméthoxysilane, le N-éthyl-3-amino-2-méthylpropyltriméthoxysilane, le N-éthyl-3-amino-2-méthylpropyldiéthoxyméthylsilane, le N-éthyl-3-amino-2-méthylpropyltriéthoxysilane, le N-éthyl-3-amino-2-méthylpropylméthyldiméthoxysilane, le N-butyl-3-amino-2-méthylpropyltriméthoxysilane, le 3-(N-méthyl-2-amino-1-méthyl-1-éthoxy)propyltriméthoxysilane, le N-éthyl-4-amino-3,3-diméthylbutyldiméthoxyméthylsilane, le N-éthyl-4-amino-3,3-diméthylbutyltriméthoxysilane, la bis(3-triméthoxysilyl-2-méthylpropyl)amine et le N-(3'-triméthoxysilylpropyl)-3-amino-2-méthylpropyltriméthoxysilane, le phénylaminopropyltriméthoxysilane, le méthylaminopropyltriméthoxysilane, le n-butylaminopropyltriméthoxysilane, le t-butylaminopropyltriméthoxysilane, le cyclohexylaminopropyltriméthoxysilane, l'aminopropyltriméthoxysilane à substitution maléate de dibutyle, le 4-amino-3,3-diméthylbutyltriméthoxysilane à substitution maléate de dibutyle, l'aminopropyltriéthoxysilane, le N-méthyl-3-amino-2-méthylpropyltriméthoxysilane, le N-éthyl-3-amino-2-méthylpropyltriméthoxysilane, le N-éthyl-3-amino-2-méthylpropyldiéthoxysilane, le N-éthyl-3-amino-2-méthylpropyltriéthoxysilane, le N-éthyl-3-amino-2-méthylpropylméthyldiméthoxysilane, le N-butyl-3-amino-2-méthylpropyltriméthoxysilane, le 3-(N-méthyl-3-amino-1-méthyl-1-éthoxy)propyltriméthoxysilane, le N-éthyl-4-amino-3,3-diméthylbutyidiméthoxyméthylsilane, le N-éthyl-4-amino-3,3-diméthylbutyltriméthoxysilane, la bis-(3-triméthoxysilyl-2-méthylpropyl)amine, le N-(3'-triméthoxysilylpropyl)-3-amino-2-méthylpropyltriméthoxysilane, la N,N-bis[(3-triéthoxysilyl)propyl]amine, la N,N-bis[(3-tripropoxy-silyl)propyl]amine, le N-(3-triméthoxysilyl)-propyl-3-[N-(3-triméthoxysilyl)propylamino]propionamide, le N-(3-triéthoxysilyl)propyl-3-[N-3-triéthoxysilyl]-propylamino]propionamide, le N-(3-triméthoxysilyl)propyl-3-[N-3-triéthoxysilyl]propylamino]propionamide, le 3-[N-(3-triméthoxysilyl)propylamino]-2-méthylpropionate de 3-triméthoxysilylpropyle, le 3-[N-(3-triéthoxysilyl)propylamino]-2-méthylpropionate de 3-triéthoxysilylpropyle, le 3-[N-(3-triéthoxysilyl)propylamino]-2-méthylpropionate de 3-triméthoxysilylpropyle, le γ-mercaptopropyltriméthoxy-silane et la N,N'-bis((3-triméthoxysilyl)propyl)amine.

10. Procédé selon la revendication 1, comprenant en outre le coiffage d'au moins une deuxième partie du polymère de polyuréthane-polyurée à terminaison isocyanate avec une monoamine ne contenant pas de silicium.

11. Procédé selon la revendication 10, dans lequel la monoamine ne contenant pas de silicium est une alkylamine.

12. Procédé selon la revendication 2, dans lequel l'étape (i) de réaction du polyol est effectuée en présence d'un catalyseur.

13. Procédé selon la revendication 12, dans lequel le catalyseur est un membre choisi dans le groupe constitué par le dilaurate de dibutyl-étain, l'acétate de dibutyl-étain, les amines tertiaires, l'octoate stanneux, l'acétate stanneux, le diméthylbis[(1-oxonéodécyl)oxy]-stannane, la 4,4'-(oxydi-2,1-éthanediyl)bismorpholine, la N-méthylmorpholine, le bis(2-diméthylaminoéthyl)éther, la triéthylènediamine, la benzyldiméthylamine et la N,N'-diméthylpipérazine.

14. Composition durcissable à l'humidité préparée par le procédé de la revendication 1, comprenant un polymère à terminaison silane contenant au moins deux liaisons uréthane et au moins deux liaisons urée dans la chaîne polymère et possédant une masse moléculaire moyenne en nombre de 15 000 à 50 000.

15. Procédé pour traiter la surface d'un substrat comprenant :
a) l'application de la composition durcissable à l'humidité de la revendication 14 ; et
b) le durcissement de ladite composition.
